# EUROPEAN PATENT APPLICATION

(11) **EP 2 905 893 A1**
(43) Date of publication of application: **12.08.2015**
(21) Application number: 13844419.5
(22) Date of filing: 30.09.2013
(51) Int. Cl.: H02P 7/298

(54) **FAN MOTOR CONTROL DEVICE**

(30) Priority: 05.10.2012 JP 2012223189
(71) Applicant: Yazaki Corporation, Tokyo 108-0073 (JP)
(72) Inventor: KONDOU, Tatsumi, Makinohara-shi Shizuoka 421-0407 (JP)
(74) Representative: Hoffmann Eitle
(86) International application number: PCT/JP2013/076547
(87) International publication number: WO 2014/054582

(57) **Abstract**

A fan motor control device is provided in which in a situation where a control unit (10) cannot obtain a rotation request (LO request) at a first rotation speed and it becomes control based on a rotation request (HI request) at a second rotation speed from an OFF request, a lock current threshold value is changed from a first threshold value (first level) to a second threshold value (second level) and after a predetermined time has passed after a second drive signal based on the HI request is outputted, the lock current threshold value is returned from the second threshold value (second level) to the first threshold value (first level).

## Description

### TECHNICAL FIELD

The present invention relates to a fan motor control device of a fan motor for cooling a radiator which cools coolant that flows within the radiator of a vehicle.

### BACKGROUND

A fan motor control device controls to keep temperature of coolant stable by driving a fan motor by pulse width modulation control to rotate a radiator fan when the temperature of the coolant within a radiator exceeds a predetermined temperature.

Incidentally, when a foreign substance such as a small stone, a twig, or the like is caught in the radiator fan and rotation of the radiator fan is locked, so-called motor lock in which drive of the fan motor is stopped may occur.

When the motor lock occurs, the electric current that flows in the fan motor is increased and a lock current (an electric current that flows in the motor at the time of overload: abnormal current) flows, which may cause damage to a drive relay and the like of the fan motor.

In this case, when an electric current that is equal to or higher than a fixed value keeps flowing even after a specified time has passed, measures are taken such as to incorporate a lock current control circuit which stops electric conduction to the fan motor and thus prevents the lock current from being outputted from the fan motor to prevent the drive relay and the like from being damaged.

In regard to operations of the lock current control circuit, for example, similar to the conduction control device as shown in PTL 1, control is performed in which an abnormality detection means compares a current value of the load current that flows in the load and a threshold, and when abnormality is detected, a current cut-off means cuts off the electric conduction to the load.

### CITATION LIST

### Patent Literature

PTL 1: JP 2010-281298A

### SUMMARY

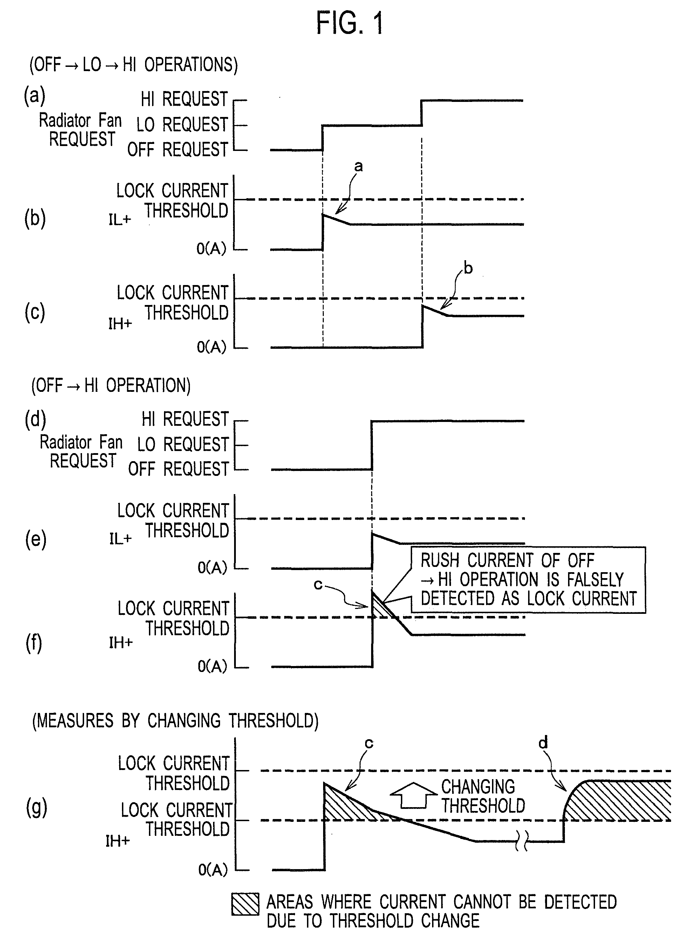

Here, one example of the drive control of a fan motor according to the above-described conventional fan motor control device will be explained by referring to Fig. 1.

When the fan motor in a stopped state is driven, as illustrated in chart (a) of Fig. 1, there is a case in which control is performed to change from an OFF request to a LO request, then to a HI request in stages. These requests are outputted as pulse signal from an ECU (Engine Control Unit) to a control unit within a drive unit which has a semiconductor device that performs a switching operation to drive the fan motor. Pulse drive signals according to the respective requests are outputted from the control unit within the drive unit to the semiconductor device.

In addition, the HI request is control for driving the fan motor at a rated rotation speed; the LO request is control for driving at a rotation speed below the rated rotation speed at the time of the HI request; and the OFF request is control for stopping drive of the fan motor. The pulse signals that indicate respective requests become higher in stages as illustrated in chart (a) of Fig. 1.

Here, the reason that the LO request is interposed between the OFF request and the HI request is because the fan motor is drive controlled by the ECU (Engine Control Unit) to become LO or HI as needed in order to prevent overheating of the engine which is caused when cooling by the coolant cannot keep up.

That is, at the time of starting the fan motor, a so-called rush current which exceeds the rated current occurs, and when it is changed from the OFF request to the HI request without the LO request being interposed, its rush current value may become too high and may exceed a threshold value (lock current threshold value) as illustrated in chart (f) of Fig. 1, and may be falsely detected as the lock current Therefore, the value of the rush current is made not to exceed the threshold by interposing the LO request so as to raise the values of the drive current supplied to the fan motor in stages. The threshold as illustrated in charts (b), (c), (e), and (f) of Fig. 1 is all in the same level.

Specifically, when it transitions from the OFF request to the LO request, a first drive current IL+ such as illustrated in chart (b) of Fig. 1 is outputted from the semiconductor device to the fan motor. Subsequently, after a predetermined time (at least the time until the rush current settles) has passed, it transitions from the LO request to the HI request, and a second drive current IH+ such as illustrated in chart (c) of Fig. 1 is outputted from the semiconductor device to the fan motor.

Here, as illustrated by the arrow "a" of chart (b) or the arrow "b" of chart (c) in Fig. 1, the rush current flows at the start of the first drive current IL+ according to the LO request, and at the start of the second drive current IH+ according to the HI request.

Since the values of the first drive current IL+ and the second drive current IH+ are raised in stages, the rush currents as illustrated by the arrows "a" and "b" have a smaller values than a value of the rush current generated when it is changed from the OFF request to the HI request without the LO request being interposed. Therefore, since the rush currents as illustrated by the arrows "a" and "b" do not exceed the threshold for detecting the lock current as illustrated in the dotted lines, respective rush currents do not become falsely detected as the lock current. Here, the threshold is a level for detecting an abnormal current such as the rush current and is set in the control unit in advance by considering the amount of the electric current and the time the electric current flows.

However, when abnormality (signal line open etc.) occurs in the output system of the ECU or in the signal line that outputs the LO request, there may be a time in which the LO request cannot be received, and in which it may be transitioned to control of the HI request without control of the LO request being interposed as illustrated in the chart (d) of Fig.1.

When it is transitioned from control of the OFF request to control of the HI request, the first drive current IL+ according to the LO request as illustrated in chart (e) of Fig. 1 does not flow, and the second drive current IH+ according to the HI request such as illustrated in chart (f) of Fig. 1 will flow.

In this case, the rush current that flows at the start of the second drive current IH+ exceeds the threshold for detecting the lock current, as in the shaded area as illustrated by the arrow "c", and is falsely detected as the lock current.

When there is such a false detection, electric conduction to the fan motor is stopped by the lock current control circuit, and there was a problem that drive of the radiator fan is stopped even when there is no lock current occurring.

In order to resolve such a problem, as illustrated in chart (g) of Fig. 1, there exist measures in which the threshold for detecting the lock current is changed to become higher, such that even if it is transitioned from control of the OFF request to control of the HI request without control of the LO request being interposed, the rush current that occurs at the time of driving the fan motor does not become falsely detected as the lock current.

However, in such measures, while the rush current that occurs at the start of the second drive current IH+ as illustrated by the arrow "c" (shaded area) in chart (g) of Fig. 1 does not become falsely detected as the lock current, if an abnormal current flows after a predetermined time has passed, as illustrated by the arrow "d" (shaded area) in chart (g) of Fig. 1, such current cannot be detected.

When a thing like this happens, since heat generation of the semiconductor device within the drive unit that drives the fan motor is raised higher than usual, it becomes necessary not only to select the semiconductor device of a high capacity type, but also to provide heat measures by increasing a heat sink and the like, and thus, there was a problem of incurring an increase in the cost of the device.

The present invention was made in view of these circumstances, and its object is to provide a fan motor control device which can perform drive control of the fan motor with certainty without adding new parts and the like, and at the same time, to provide a fan motor control device which can restrain an increase in the cost of the device.

A fan motor control device according to a first aspect of the invention is a fan motor control device for performing drive control of a fan motor of a vehicle, which includes: a control unit configured to perform drive control of the fan motor based on a rotation request at a first rotation speed and a rotation request at a second rotation speed which is faster than the first rotation speed in order subsequent to an OFF request from the outside by outputting drive signals according to respective requests; a first switching device for outputting to the fan motor a drive current obtained by a switching operation based on a drive signal according to the rotation request at the first rotation speed; and a second switching device for outputting to the fan motor a drive current obtained by a switching operation based on a rotation request at the second rotation speed. The control unit has a first level for detecting an abnormal current that flows in the fan motor and a second level which is higher than the first level, and in a state in which the rotation request at the first rotation speed cannot be obtained and control is performed based on the rotation request at the second rotation speed from the OFF request, the control unit changes the first level to the second level, and after a predetermined time has passed after a drive signal based on the rotation request at the second rotation speed is outputted, returns the second level to the first level.

It is preferable that: the first level is a level for detecting an abnormal current that flows in the fan motor in respective controls of the rotation request at the first rotation speed and the rotation request at the second rotation speed; the second level is a level for detecting an abnormal current that flows in the fan motor by control of the rotation request at the second rotation speed from the OFF request without control of the rotation request at the first rotation request being interposed; and timing to return the second level to the first level is after a rush current that flows in the fan motor by the control of the rotation request at the second rotation speed has settled.

In the fan motor control device according to the invention, in the state in which the rotation request at the first rotation speed cannot be obtained and control is performed based on the rotation request at the second rotation speed from the OFF request, the first level is changed to the second level, and after the predetermined time has passed after the drive signal based on the rotation request at the second rotation speed is outputted, the second level is returned to the first level.

Thus, even in a situation where it becomes control based on the HI request from the OFF request, the transitional rush current that flows in the fan motor is made not to be falsely detected as an abnormal current (lock current or the like). Also, an abnormal current that occurs while the fan motor is driven can be detected by the first level that is returned from the second level.

With the fan motor control device according to the invention, even in the state in which the rotation request at the first rotation speed cannot be obtained and control is performed based on the rotation request at the second rotation speed from the OFF request, the transitional rush current that flows in the fan motor is made not to be falsely detected as an abnormal current (lock current or the like). Accordingly, it is possible to perform drive control of the fan motor with certainty without adding new parts and the like, and at the same time, it is possible to restrain an increase in the cost of the device.

### BRIEF DESCRIPTION OF DRAWINGS

Fig. 1 is wave form charts for explaining one example of drive control of a conventional fan motor.
Fig. 2 is a figure for explaining a fan motor control device according to an embodiment.
Fig. 3 is wave form charts for explaining drive control of a fan motor according to the fan motor control device of the embodiment.

### DESCRIPTION OF EMBODIMENTS

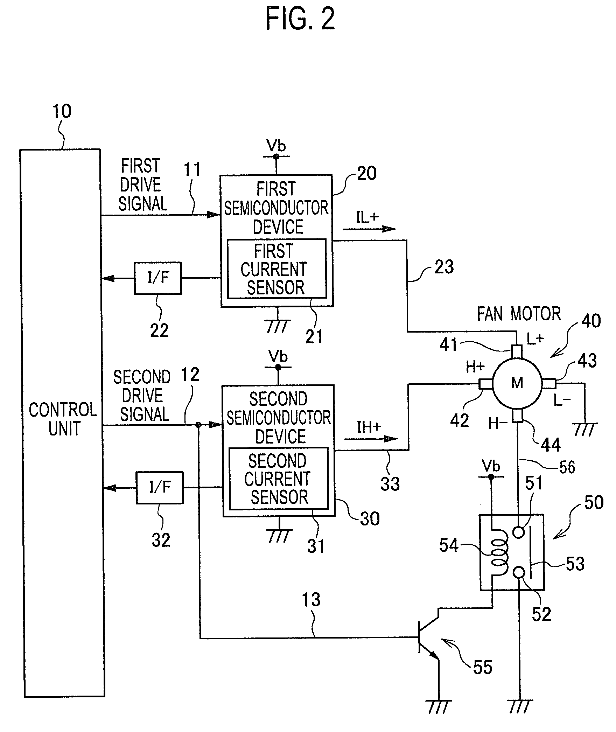

The fan motor control device according to an embodiment will be explained by referring to Fig. 2. Also, since basic control operations by the fan motor control device according to the embodiment at a normal time are the same as charts (a) to (c) of Fig. 1, explanations for charts (a) to (c) of Fig. 1 will be suitably referred to in the explanations below.

Features of the fan motor control device according to the embodiment (control operations at an abnormal time) are to resolve a false detection of the rush current as the lock current caused by transitioning from control of the OFF request to the HI request as explained with charts (d) to (f) of Fig. 1. Therefore, explanations for charts (d) to (f) of Fig. 1 will be suitably referred to in the explanations below.

As illustrated in Fig. 2, a drive unit as a fan motor control device includes a control unit 10, a first semiconductor device 20, and a second semiconductor device 30.

Respective requests of an OFF request, LO request, and HI request from an ECU (Engine Control Unit) are inputted as a pulse-like signal to the control unit 10. The control unit 10 outputs a drive signal for driving a fan motor 40 to the first semiconductor device 20 and the second semiconductor device 30. The control unit 10 can recognize that a first drive current IL+ according to the LO request and a second drive current IH+ according to the HI request are outputted normally by receiving current detection signals from a first current sensor 21 of the first semiconductor device 20 and a second current sensor 31 of the second semiconductor device 30.

A first drive signal from the control unit 10 to the first semiconductor device 20 is a signal according to the LO request as explained in chart (a) of Fig. 1, and it is outputted via a first signal line 11. A second drive signal from the control unit 10 to the second semiconductor device 30 is a signal according to the HI request as explained in chart (a) of Fig. 1, and it is outputted via a second signal line 12. When there is an OFF request, there will be neither of the first drive signal according to the LO request which is outputted via the first signal line 11 nor the second drive signal according to the HI request which is outputted via the second signal line (both becomes OFF).

The fan motor 40 is drive controlled such that it becomes LO or HI as necessary. For example, when it is drive controlled to become HI, as explained in chart (a) of Fig. 1, the first drive signal according to the LO request is outputted first and subsequently the second drive signal according to the HI request is outputted. It is set in advance such that the second drive signal according to the HI request is outputted after a predetermined time (at least the time until the rush current settles) has passed after the first drive signal according to the LO request is outputted.

The control unit 10 has predetermined threshold values (first level and second level) and it determines whether it is a normal current or an abnormal current by comparison with the current detection signals from the first current sensor 21 and the second current sensor 31. The threshold values here are in levels that can detect an abnormal current such as a rush current and the like, and they are set in the control unit 10 in advance by considering the amount of the current and the time the current flows.

Also, if for example the LO request from the ECU cannot be received, the control unit 10 at least can determine that abnormality (signal line open etc.) is occurring in the output system of the ECU or in the signal line that outputs the LO request. In this case, the control unit 10 performs control to change the lock current threshold value from a first threshold value (first level) to a second threshold value (second level) so that the rush current that occurs in the fan motor 40 at the time of control of the HI request does not become falsely detected as the rock current.

The first semiconductor device 20 drives the fan motor 40 based on the first drive signal according to the LO request from the control unit 10, and it is composed of a semiconductor device and the like. The first semiconductor device 20 has the first current sensor 21 and outputs the first drive current IL+ that corresponds to the first drive signal according to the LO request to an L+ terminal 41 of the fan motor 40 via a first conducting wire 23. The first current sensor 21 monitors the first drive current IL+ and outputs the monitored current value as a current detection signal to the control unit 10 via an I/F (interface) 22. A power supply voltage Vb is connected to the first semiconductor device 20. Also, the reference character Vb indicates the power supply voltage that has approximately same value as the battery voltage of the vehicle.

The second semiconductor device 30 performs a switching operation and drives the fan motor 40 based on the second drive signal according to the HI request from the control unit 10. The second semiconductor device 30 has the second current sensor 31 and outputs the second drive current IH+ that corresponds to the second drive signal according to the HI request to an H+ terminal 42 of the fan motor 40 via a second conducting wire 33. The second current sensor 31 monitors the second drive current IH+ and outputs the monitored current value as a current detection signal to the control unit 10 via an I/F (interface) 32. A power supply voltage Vb is connected to the second semiconductor device 30 also.

The fan motor 40 is for rotating a radiator fan and has the L+ terminal 41, the H+ terminal 42, an L- terminal 43, and an H- terminal 44. The first drive current IL+ flows to the L+ terminal 41. The second drive current IH+ flows to the H+ terminal 42. The L- terminal 43 is connected to the ground (0V). The H- terminal 44 is connected to a fixed contact 51 of a relay 50.

The relay 50 is provided with the first fixed contact 51, a second fixed contact 52, a moving contact 53 and a coil 54. The first fixed contact 51 is connected to the H- terminal 44 via a conducting wire 56. The second fixed contact 52 is connected to the ground. A power supply voltage Vb is connected to one end of the coil 54. A collector of a transistor 55 is connected to the other end of the coil 54.

A base of the transistor 55 is connected to a third signal line 13 which is branched off from the second signal line 12 to which the second drive signal according to the HI request is outputted. When the second drive signal according to the HI request is outputted to the second signal line 12, the transistor 55 is turned ON.

When the transistor 55 is turned ON, the moving contact 53 contacts the first fixed contact 51 and the second fixed contact 52 by the excitation effect of the coil 54. At this time, by the short-circuit of the first fixed contact 51 and the second fixed contact 52, the second drive current IH+ flows from the from the H- terminal 44 of the fan motor 40 to the transistor 55 side.

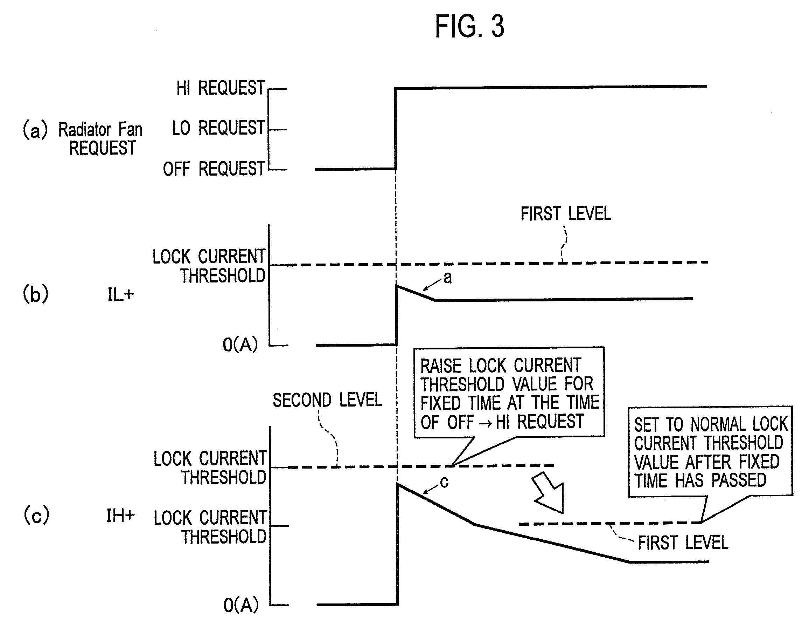

Next, drive control by the fan motor control device according to the embodiment will be explained by referring to Fig. 3.

In normal operations at a normal time by the fan motor control device, when driving the fan motor 40 in a stopped state, requests from the ECU to the control unit 10 change from the OFF request to the LO request, and to the HI request as explained in charts (a) to (c) of Fig. 1.

In this case, when the LO request is outputted from the ECU to the control unit 10, the first drive signal according to the LO request is outputted from the control unit 10 to the first semiconductor device 20 via the first signal line 11. At this time, the first drive current IL+ that corresponds to the first drive signal according to the LO request flows from the first semiconductor device 20 to the L+ terminal 41 of the fan motor 40 via the first conducting wire 23. Thus, the fan motor 40 rotates at a rotation speed according to the first drive current IL+ and rotates the radiator fan.

Here, as explained in chart (b) of Fig. 1, the rush current flows at the start of the first drive current IL+ that corresponds to the first drive signal according to the LO request, but since that rush current does not exceed the threshold, no false detection as the lock current occurs.

Subsequently, after a predetermined time (at least the time until the rush current settles) has passed, when the HI request is outputted from the ECU to the control unit 10, the second drive signal according to the HI request is outputted from the control unit 10 to the second semiconductor device 30 via the second signal line 12. At this time, the second drive current IH+ that corresponds to the second drive signal according to the HI request flows from the second semiconductor device 30 to the H+ terminal 42 of the fan motor 40 via the second conducting wire 33. Thus, the fan motor 40 rotates at a rotation speed according to the second drive current IH+, that is, at a rotation speed (rated rotation speed) that is faster than the rotation speed according to the first drive current IL+, and rotates the radiator fan at a faster rotation speed.

At this time, as explained in chart (c) of Fig. 1, the rush current flows at the start of the second drive current IH+ that corresponds to the second drive signal according to the HI request. However, since that rush current does not exceed the threshold, no false detection as the lock current occurs.

As such, according to the requests from the ECU, drive of the fan motor 40 is controlled by the first semiconductor device 20 and the second semiconductor device 30 being controlled by the control unit 10.

Here, when abnormality (signal line open etc.) occurs in the output system of the ECU or in the signal line that outputs the LO request, it is not possible to receive the LO request as illustrated in chart (a) of Fig. 3 which illustrates the same content as explained in chart (d) of Fig. 1. Therefore, it will be transitioned to control of the HI request without control of the LO request being interposed.

In this case, as explained in chart (f) of Fig. 1, the rush current that flows at the start of the second drive current IH+ exceeds the threshold, and it is falsely detected as the lock current.

Therefore, in the fan motor control device according to the embodiment, the control unit 10 changes a first threshold value (first level) to a second threshold value (second level) which is at a higher level than the first threshold value (first level), as illustrated in charts (b) and (c) of Fig. 3.

Subsequently, the control unit 10 outputs a first drive signal that corresponds to the LO request to the first semiconductor device 20 via the first signal line 11, and at the same time, outputs a second drive signal according to the HI request to the second semiconductor device 30 via the second signal line 12.

In this case, since the gradual control from the LO request to the HI request is not performed, the rush current that flows at the start of the second drive current IH+ of chart (c) of Fig. 3 as illustrated by the arrow "c" becomes large. However, since the lock current threshold value is changed from the first threshold value (first level) to the second threshold value (second level), the transitional rush current that flows in the fan motor 40 does not become falsely detected as an abnormal current (lock current or the like). Naturally, the rush current that flows at the start of the first drive current IL+ as illustrated by the arrow "a" of chart (b) of Fig. 3 also does not become falsely detected as an abnormal current (lock current or the lime).

At this time, the first drive current IL+ is outputted to the L+ terminal 41 of the fan motor 40 via the first conducting wire 23 and the second drive current IH+ is outputted to the H+ terminal 42 of the fan motor 40 via the second conducting wire 33.

Thus, rotation speed of the fan motor 40 is elevated to the rotation speed according to the second drive current IH+ and the radiator fan is rotated.

Subsequently, after a predetermined time (at least the time until the rush current as illustrated by the arrow "c" settles) has passed, the second threshold value (second level) of the control unit 10 is returned to the first threshold value (first level) used at a normal operation at a normal time by the fan motor control device.

Therefore, an abnormal current that occurs at the time of driving the fan motor can be detected by the first threshold value (first level).

As such, with the fan motor control device according to the embodiment, in a situation where the control unit 10 cannot obtain a rotation request at a first rotation speed (LO request), and it becomes control based on a rotation request at a second rotation speed (HI request) from the OFF request, the lock current threshold value is changed from the first threshold value (first level) to the second threshold value (second level) and after a predetermined time has passed after the second drive signal based on the HI request is outputted, the lock current threshold value is returned from the second threshold value (second level) to the first threshold value (first level).

Therefore, even in a situation where it becomes control based on the HI request from the OFF request, the transitional rush current that flows in the fan motor 40 is made not to be falsely detected as an abnormal current (lock current or the like). Accordingly, it is possible to perform drive control of the fan motor with certainty without adding new parts and the like, and at the same time, it is possible to restrain an increase in the cost of the device. Also, an abnormal current that occurs when the fan motor 40 is driven can be detected by the first threshold value (first level) that is returned from the second threshold value (second level).

Moreover, in the fan motor control device according to the embodiment, the timing to return the second threshold value (second level) to the first threshold value (first level) is made to be after the rush current that flows in the fan motor 40 by the control of the HI request has settled. Thus, even in the situation where it becomes control based on the HI request from the OFF request, it is possible to make the rush current of the fan motor 40 that occurs by the second drive current IH+ not to exceed the second threshold value (second level).

### INDUSTRIAL APPLICABILITY

The fan motor control device according to the invention is not limited to those that perform drive control of a fan motor for rotating a radiator fan, but it is applicable to drive control of other motors such as a motor for an automatic window, a wiper, and the like.

## Claims

1. A fan motor control device for performing drive control of a fan motor of a vehicle, comprising:
a control unit configured to perform drive control of the fan motor based on a rotation request at a first rotation speed and a rotation request at a second rotation speed which is faster than the first rotation speed in order subsequent to an OFF request from the outside by outputting drive signals according to respective requests;
a first switching device for outputting to the fan motor a drive current obtained by a switching operation based on a drive signal according to the rotation request at the first rotation speed; and
a second switching device for outputting to the fan motor a drive current obtained by a switching operation based on the rotation request at the second rotation speed, wherein
the control unit has a first level for detecting an abnormal current that flows in the fan motor and a second level which is higher than the first level, and in a state in which the rotation request at the first rotation speed cannot be obtained and control is performed based on the rotation request at the second rotation speed from the OFF request, the control unit changes the first level to the second level, and after a predetermined time has passed after a drive signal based on the rotation request at the second rotation speed is outputted, returns the second level to the first level.

2. The fan motor control device according to claim 1, wherein
the first level is a level for detecting an abnormal current that flows in the fan motor in respective controls of the rotation request at the first rotation speed and the rotation request at the second rotation speed,
the second level is a level for detecting an abnormal current that flows in the fan motor by control of the rotation request at the second rotation speed from the OFF request without control of the rotation request at the first rotation request being interposed, and
timing to return the second level to the first level is after a rush current that flows in the fan motor by the control of the rotation request at the second rotation speed has settled.
